# EUROPEAN PATENT SPECIFICATION

(11) **EP 1 723 924 B1**
(45) Date of publication and mention of the grant of the patent: **02.02.2011**
(21) Application number: 06252608.2
(22) Date of filing: 16.05.2006
(51) Int. Cl.: A61C 5/02, A61C 1/07, A61C 3/03

(54) **Endodontic system employing simultaneous liquefaction and acoustic debridement**
Endodontisches System mit simultaner Verflüssigung und akustischer Abtragung
Système endodontique avec une fluidification et une extirpation acoustique de débris simultanée

(30) Priority: 16.05.2005 US 130081
(43) Date of publication of application: 22.11.2006
(73) Proprietor: Johnson, Douglas B., Tulsa, OK 74114 (US)
(72) Inventor: Johnson, Douglas B., Tulsa, OK 74114 (US)
(74) Representative: Pluckrose, Anthony William

(56) References cited:
- EP-A- 0 323 598
- WO-A-03/070121
- DE-A1- 3 704 194
- US-A- 3 547 110
- US-A- 3 703 037
- US-A- 4 021 921
- US-A- 4 330 278
- US-A- 4 492 574
- US-A- 5 772 434
- US-A- 6 162 202
- US-A1- 2004 038 175
- US-A1- 2004 126 732

## Description

### FIELD OF THE INVENTION

This invention relates to endodontic root canal preparation achieved by simultaneous liquefaction and acoustic debridement.

### BACKGROUND OF THE INVENTION

This invention relates to dental instruments and particularly to endodontic instruments, systems and procedures for treating a tooth root canal in which the root canal is cleansed of bacteriological materials by physical and acoustic debridement and flushing with an irrigation solution, particularly the apparatus and equipment for providing irrigation to remove diseased and necrotic tissue.

Endodontic has become an important part of dentistry. Whereas, prior to the common use of endodontic procedures, an abscessed tooth was typically treated only by extraction of the tooth. However since the advancement of endodontics abscessed teeth can be successfully treated to permit retention by a patient for greatly increased health and physiological benefit. Endodontics has been one of the great advancements in modem medicine.

The endodontic preparation of a root canal typically includes opening the root canal through the coronal area of the tooth and thereafter manipulating files and reamers within the root canal to physically remove as much as possible of the pulpal material. This pulpal material is typically infected or necrotic, that is, dead material and any such material that remains in the root canal after the procedure is completed is a source of potential infection. For this reason the proper treatment of a root canal attempts to remove as much of such necrotic pulpal material as is possible. By use of files and reamers, a substantial portion of such pulpal material can be removed however it is virtually impossible in most cases to remove all such material by physical manipulation of tools within the canal. For this reason, in recent times procedures have been developed wherein the root canal is irrigated or flushed with a fluid to remove and/or neutralize organic pulpal material that remains after files and reamers have been employed.

As background information reference may be had to United States Patent 4,330,278 that issued May 18, 1982 to Howard Martin, entitled "Endodontic Flow-Through Ultrasonic Instrument Holder Device". This device shows a system that includes a holder for holding an instrument used for dental work that includes a passageway by which flushing fluid can be injected into a tooth during endodontic procedures. The present invention is an improvement on this basic concept as revealed in this U.S. patent.

Also, US 4,021,921 describes a system for removing material from a root canal. Low frequency pulses having a period of between 6 and 20 seconds are used together with pulses of a higher frequency 0.6 to 2.6Hz and preferably 1.33 Hz.

US 2004/0038175 discloses a dental tool for use with an ultrasonic transducer. The tool is formed with a fluid outlet port, positioned and configured to direct fluid such as water into the working area to flush debris therefrom.

US 6,162,202 discloses a further system for removing material from a root canal. The system comprises an ultrasonic vibratory needle and a flushing fluid that is connected to an ultrasonic vibratory means and a fluid pulse generator.

### BRIEF SUMMARY OF THE INVENTION

The invention herein is a system and a method of simultaneous liquefaction and acoustic debridementof a tooth root canal. The system includes a manipulatible hand piece having a flow passageway therethrough. An ultrasonic energy generator is secured to the hand piece. A flexible injection tube is dimensioned and configured for insertion in to a tooth root canal. A coupler is employed for removably affixing the proximal end of the injection tube to a hand piece. A pressurized source of flushing fluid is connected to the hand piece by which fluid having ultrasonic energy imposed thereon is forced into the root canal. Said pressurized fluid source comprises a positive displacement pump to cause the fluid flow through the system to be in a series of pressure pulses.

An important improvement in the invention herein is the provision of a system in which fluid is injected into a tooth root canal using pressure pulses that augments the dislodgement and removal of debris contained in the root canal while simultaneously the fluid pressure pulses are superimposed with ultrasonic energy.

A more complete understanding of the invention will be obtained from the following detailed description of the preferred embodiments taken in conjunction with the drawings and attached claims.

### BRIEF DESCRIPTION OF THE DRAWINGS

Figure 1 is a partial cross-sectional view of a hand piece by which an irrigation fluid may be injected into a tooth root canal. The hand piece has an ultrasonic generator as a part thereof whereby the flushing fluid injected into the tooth root canal is energized with ultrasonic energy.
Figure 2 shows the hand piece as illustrated in Figure 1 with an ultrasonic generator having provision to accommodate the flow of flushing fluid therethrough.
Figure 3 is a diagrammatic view of a system for employing the invention. This figure shows a positive displacement pump that forces irrigation fluid under pulsed pressure for injecting into a tooth's root canal. This figure further shows electrical energy applied to the hand piece ultrasonic generator whereby ultrasonic energy is applied to the hand piece and to the flushing liquid.
Figure 4 is a chart illustrating the pressure of irrigation fluid injected into a tooth root canal by the systems and methods of this invention and shows pressure pulses having superimposed ultrasonic energy thereon.

Elements shown by the drawings are identified by the following numbers:
- 10: Tooth
- 12: coronal area
- 14: Roots
- 16: open area
- 18: root canal
- 20: root canal
- 22: Apex
- 24: hand piece
- 26: tubular body portion
- 28: flow passageway
- 30: internal threads
- 32: enlarged portion
- 34: coupling nut
- 36: Passageway
- 38: flexible injection tube
- 40: enlarged end portion
- 42: distal end
- 44: ultrasonic generator
- 46: passageway
- 48: power cord
- 50: reservoir
- 52: pump
- 54: conduit
- 56: supply tube
- 58: power plug
- 60: cylinder
- 62: piston
- 64: motor
- 66: shaft
- 68: crank arm
- 70: piston rod
- 72: inlet valve
- 74: outlet valve
- 76: pressure pulses

### DETAILED DESCRIPTION OF THE PREFERRED EMBODIMENTS

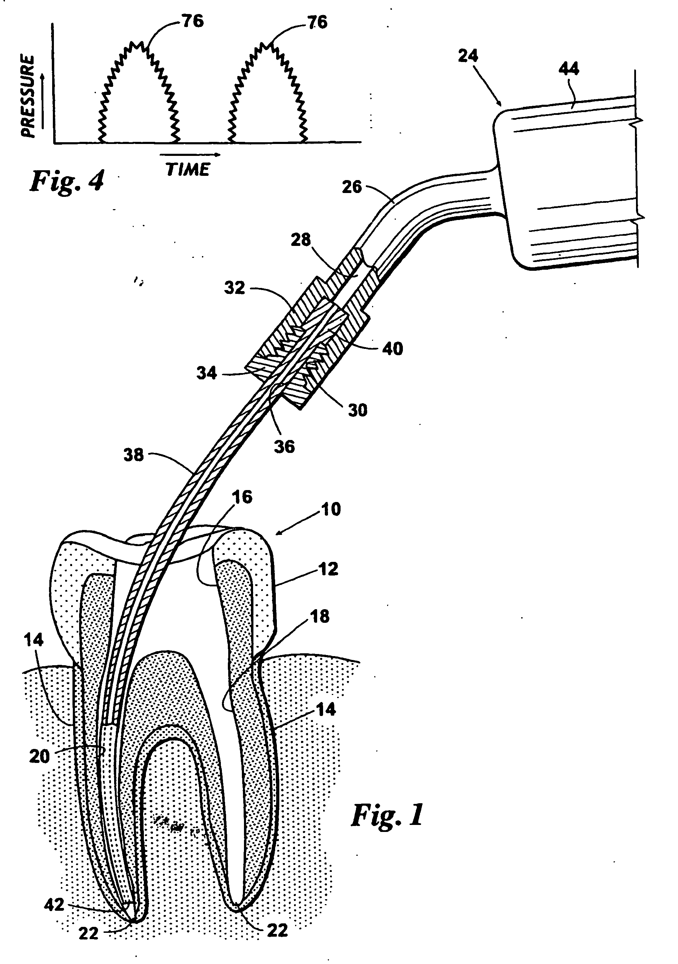

Referring to the drawings and first to Figure 1, a typical tooth 10 is illustrated in cross-section. The tooth includes a coronal area 12 and roots 14 extending therefrom. The coronal area has an open area 16 that has been drilled to provide access to the upper end of root canals 18 and 20. These root canals 18, 20 extend to the apex 22 of each of the canals.

The practice of endodontic includes, as an important part thereof, preparation of root canals 18 and 20 to receive filler material. Such filler material is typical gutta percha but other comparable materials have been developed. It is important that the root canals 18 and 20 be shaped and cleaned as thoroughly as possible to remove all organic material. Such organic material is typically pulpal material that exists as a natural portion of a tooth and by which a tooth is nourished during the formation process. Such pulpal material, if left within a root canal and entrapped by filler material, can become infected and thereby cause problems to the patient. The infection that originates within a root canal can spread to other parts of the body. For this reason, it is important, as above stated, to remove as much pulpal and other necrotic material from the confines of the root canals 18 and 20 as is possible.

The typical endodontic procedure requires the endodontist to scrape and shape the root canals in a way to remove as much as possible of pulpal material and to shape the root canal to receive filler material. However, though not shown in Figure 1, root canals 18 and 20 typically have laterally extending fissures and other irregularities in which pulpal material can become entrapped and so that it is very difficult to remove all pulpal material by physically scraping and shaping alone.

For this reason, a procedure has arisen wherein after a root canal is cleansed and shaped mechanically, the root canal is then flushed. For use in flushing a tooth root canal by the methods of this invention, a hand piece, generally indicated by the numeral 24, is employed. Hand piece 24 includes a tubular body portion 26 that has a flow passageway 28 therethrough. The distal end of the tubular body portion is slightly enlarged and provided with internal threads 30, the enlarged portion being indicated by the numeral 32.

Threadably received within the outer end of enlarged portion 32 is a coupling nut 34 that has passageway 36 through it. An injection tube 38 has an integral enlarged end portion 40. The flexible injection tube extends through passageway 36 in the coupling nut which engages enlarged end portion 40 so that the flexible injection tube 38 is connected to the outer end of hand piece tubular body portion 26. The flexible injection tube 38 is elongated and may, as indicated, be tapered towards the distal end 42 that is configured to reach as near as possible to the lower end portions of root canal 18, 20.

Hand piece 24 further includes, as a part of the body portion, an ultrasonic generator 44 that has the capacity to generate ultrasonic sound energy in the form of vibrations. The sound vibrations from ultrasonic generator 44 are coupled to the hand piece tubular body portion and to flexible injection tube 38.

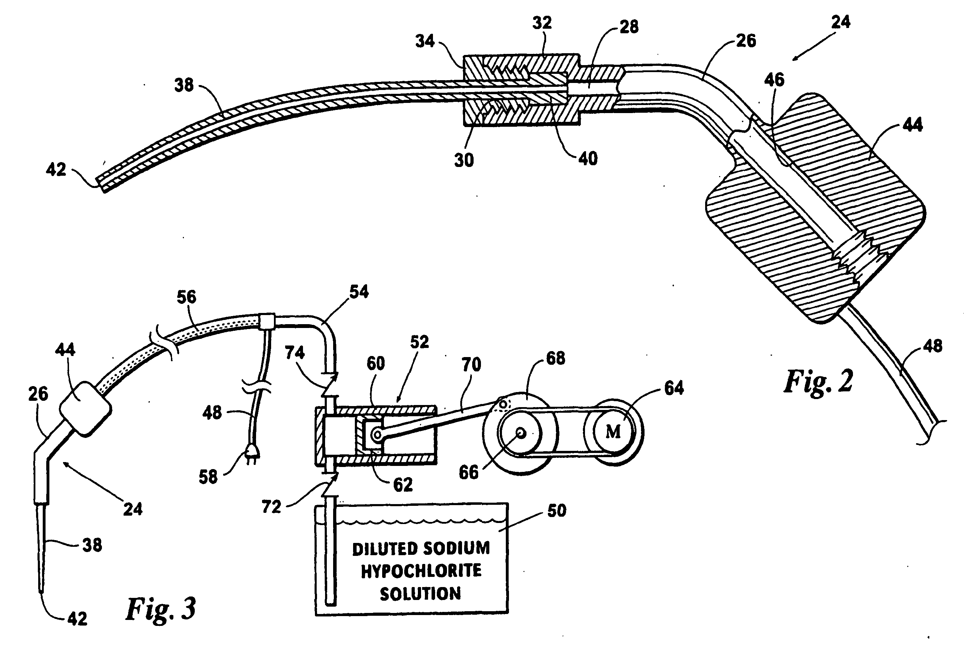

Figure 2 shows the hand piece 24 that has been described and shows a passageway 46 extending through ultrasonic generator 44. Thus, passageway 46 is in communication with the tubular body portion flow passageway 28 which in turn communicates with the flexible injection tube 38. A power cord 48 supplies electrical energy to ultrasonic generator 44

Figure 3 shows diagrammatically the method of practicing the invention. The hand piece 24 is shown diagrammatically with flexible injection tube 38 and ultrasonic generator 44. The system is shown by which liquid may be injected through the hand piece 26 and thereby the flexible injection tube 38 for passage into the root canal of a tooth as shown in Figure 1 for purposes of flushing the tooth as a part of an endodontic procedure.

Fluid for use in flushing a tooth is contained in a reservoir 50. A typical fluid useable for flushing an endodontically prepared root canal is sodium hypochlorite, usually used as a diluted solution. A pump 52 is employed for moving fluid from reservoir 50 by way of a conduit 54 to a supply tube 56 whereby the fluid is conveyed to hand piece 24, fluid passing through ultrasonic generator 44. Supply tube 56 is shown to carry with it a conductor for electrical energy supplied by a power plug 58. The pump 52 is a positive displacement pump 52 that includes a cylinder 60 and a piston 62. A motor 64 drives a shaft 66 that has a crank arm 68. Extending from crank arm 68 is a piston rod 70. Pump 52 further includes an inlet valve 72 and an outlet valve 74.

When motor 64 is energized, piston 62 is reciprocated. On each reverse stroke liquid is drawn from tank 50 through intake valve 72 and on the forward or power stroke intake valve 72 is closed and the liquid is forced from the interior of cylinder 64 through outlet valve 74. The liquid passing through conduit 54, supply tube 56, ultrasonic generator 44, tubular body portion 26 and out through the distal end 42 of flexible injection tube 38.

The positive displacement pump causes the fluid flow through the system to be in a series of pressure pulses as contrasted with substantially constant pressure fluid flow. Figure 4 is a chart showing the preferred practice of the invention wherein the abscissa is time and the ordinate is pulse pressure showing that the pressure on the fluid passing into a root canal is a sequence of pulses that vary in frequency directly proportional to the rate pump 64 is rotated. Further, an important aspect of the invention is that the fluid injected into a root canal has pressure pulses having superimposed ultrasonic forces. Figure 4 shows the pressure relationship of the liquid passing into a root canal of the system of this invention in which the abscissa is time and the ordinate is fluid pressure. This figure illustrates the variation in fluid pressure as a consequence of the positive displacement pump showing a sequence of pulses created when piston 62 moves forward separated by periods of low or substantially zero pressure as piston 62 is moved rearwardly. The result is a series of rapid sequential pressure pulses. A unique feature of this invention is the provision of pressure pulses having ultrasonic energy imposed thereon.

The use of ultrasonic energy for improving endodontic procedures is documented in U.S. Patent 4,330,278. The concept herein is to provide a system of flushing or irrigating a root canal in a way to maximize removal and neutralization of organic material. Further, the solution by which the canal is washed is preferably one that removes and neutralizes necrotic tissue so as to reduce the chance that the root canal will have bacteria therein when it receives the filler material after the canal has been properly prepared. The use of sodium hypochlorite to react with necrotic tissue is well known. In addition to sodium hypochlorite other chemical solutions may be employed and sodium hypochlorite is illustrated herein as a typical solution that has the capacity to react with and neutralize necrotic material while having minimal effect on non-necrotic tissue in the body.

The rate of pressure pulses employed in the practice of the invention can vary substantially from a relatively low frequency of two or three pulses per second to a high frequency such as 50 to 100 pulses per second. The ultrasonic frequency rate can also vary but typically is at a frequency above 20,000 Hz.

The ultrasonic generator as indicated in Figures 1 and 2 is diagrammatic only since such apparatus is known in the industry and readily commercially available. The flow of fluids through the channels provided in the system forms an effective pathway for the transmission of ultrasonic energy since ultrasonic signals flow through a liquid medium with little resistance as is readily indicated by the success of sonar and other apparatus for measuring using sound energy transmitted through water.

It is understood that the invention is not limited to the embodiments set forth herein for purposes of exemplification, but is to be limited only by the scope of the attached claims.

## Claims

1. A system for use in simultaneous liquefaction and acoustic debridement of a tooth root canal (18, 20) comprising:
a graspable and manipulatible elongated hand piece (24) having a proximal end and a distal end and a flow passageway (28) therethrough;
an ultrasonic energy generator (44) secured to said hand piece (24) proximal end;
a somewhat flexible injection tube (38) having a proximal end (40) and a distal end (42) portion that is dimensioned and configured for insertion into a tooth root canal (18, 20);
a threaded coupler (32, 34) for removably affixing said proximal end (40) of said injection tube (38) to said distal end of said hand piece; and
a pressurized source of flushing fluid (50) connected to said hand piece (24) proximal end arranged such that fluid having ultrasonic energy superimposed thereon can be forced into the root canal (18, 20); wherein
said pressurized fluid source is operable to produce pulsed fluid pressure upon which said ultrasonic energy is superimposed;
**characterized in that** said pressurized fluid source comprises a positive displacement pump (52) to cause the fluid flow through the system to be in a series of pressure pulses.

2. A system for use in simultaneous liquefaction and acoustic debridement of a tooth root canal according to Claim 1 wherein said discharge injection tube (38) extends at an angle relative to said elongated hand piece (24).

3. The system of Claim 1 or 2 further comprising:
a reservoir (50) for storing said flushing fluid; and
a means (54, 56) for connecting said hand piece to said reservoir.

4. The system of Claim 2 wherein said hand piece (24) comprises an angled member (26) and said angled member (26) comprises an angle of about 30° to 90°.

## Patentansprüche

1. System zur Verwendung bei der simultanen Verflüssigung und akustischen Entfernung eines Zahnwurzelkanals (18, 20), wobei das System Folgendes aufweist:
ein greifbares und handhabbares längliches Handstück (24) mit einem proximalen Ende und einem distalen Ende sowie einem Strömungsdurchlass (28);
einen Ultraschallenergie-Generator (44), welcher an dem proximalen Ende des Handstücks (24) befestigt ist;
ein etwas biegsames Injektionsrohr (38) mit einem proximalen Endabschnitt (40) und einem distalen Endabschnitt (42), welcher zur Einführung in einen Zahnwurzelkanal (18, 20) bemessen und ausgelegt ist;
ein Gewinde-Verbindungsstück (32, 34) zur lösbaren Befestigung des proximalen Endes (40) des Injektionsrohrs (38) an dem distalen Ende des Handstücks; und
eine druckbeaufschlagte Quelle an Spülflüssigkeit (50), welche mit dem proximalen Ende des Handstücks (24) verbunden ist und derart angeordnet ist, dass die mit Ultraschallenergie überlagerte Flüssigkeit in den Wurzelkanal (18, 20) gedrückt werden kann; wobei
die druckbeaufschlagte Flüssigkeitsquelle betriebsbereit ist, um gepulsten Fluid- oder Flüssigkeitsdruck zu erzeugen, welcher mit der Ultraschallenergie überlagert wird;
**dadurch gekennzeichnet, dass** die druckbeaufschlagte Flüssigkeitsquelle eine Verdrängungs- bzw. Druckpumpe (52) aufweist, welche bewirkt, dass der Füssigkeitsstrom durch das System in einer Reihe von Druckimpulsen erfolgt.

2. System zur Verwendung bei der simultanen Verflüssigung und akustischen Entfernung eines Zahnwurzelkanals nach Anspruch 1, **dadurch gekennzeichnet, dass** sich das Ausstoß-Injektionssrohr (38) in einem Winkel relativ zu dem länglichen Handstück (24) erstreckt.

3. System nach Anspruch 1 oder 2, welches des Weiteren Folgendes aufweist:
einen Behälter (50) zur Speicherung der Spülflüssigkeit; und
eine Vorrichtung (54, 56) zur Verbindung des Handstücks mit dem Behälter.

4. System nach Anspruch 2, **dadurch gekennzeichnet, dass** das Handstück (24) einen abgewinkelten Teil (26) aufweist, und dass der abgewinkelte Teil (26) einen Winkel von ungefähr 30° bis 90° aufweist.

## Revendications

1. Système à utiliser dans la liquéfaction et le débridement acoustique simultanés d'un canal (18, 20) d'une racine dentaire comprenant :
une pièce à main allongée (24) qui peut être saisie et manipulée et ayant une extrémité proximale et une extrémité distale et un passage d'écoulement (28) qui la traverse ;
un générateur d'énergie ultrasonore (44) fixé à ladite extrémité proximale de la pièce à main (24) ;
un tube d'injection (38) assez souple ayant une partie d'extrémité proximale (40) et une partie d'extrémité distale (42) qui est dimensionnée et configurée de façon à s'insérer dans le canal (18,20) d'une racine dentaire ;
un coupleur fileté (32, 34) destiné à attacher de manière amovible ladite extrémité proximale (40) dudit tube d'injection (38) à ladite extrémité distale de ladite pièce à main ; et
une source sous pression de fluide de rinçage (50) reliée à ladite extrémité proximale de la pièce à main (24) agencée de sorte à pouvoir forcer le fluide sur lequel est superposée de l'énergie ultrasonore dans le canal radiculaire (18, 20) ; où
ladite source de fluide sous pression peut être mise en oeuvre pour produire une pression pulsée de fluide sur laquelle est superposée ladite énergie ultrasonore ;
**caractérisé en ce que** ladite source de fluide sous pression comprend une pompe (52) à déplacement positif pour amener l'écoulement de fluide à travers le système à se trouver en série d'impulsions de pression.

2. Système à utiliser dans la liquéfaction et le débridement acoustique simultanés du canal d'une racine dentaire selon la revendication 1 dans lequel ledit tube (38) d'injection de décharge s'étend avec un angle par rapport à ladite pièce à main allongée (24).

3. Système de la revendication 1 ou 2 comprenant en outré :
un réservoir (50) pour stocker ledit fluide de rinçage ; et
un moyen (54, 56) pour relier ladite pièce à main audit réservoir.

4. Système de la revendication 2 dans lequel ladite pièce à main (24) comprend un élément angulaire (26) et ledit élément angulaire (26) comprend un angle d'environ 30° à 90°.
